# EUROPEAN PATENT SPECIFICATION

(11) **EP 2 234 230 B1**
(45) Date of publication and mention of the grant of the patent: **16.05.2012**
(21) Application number: 10157905.0
(22) Date of filing: 26.03.2010
(51) Int. Cl.: H02G 3/04, H02G 3/06

(54) **Conical cable duct**
Konische Kabelträger
Conduite conique de câble

(30) Priority: 26.03.2009 BE 200900187
(43) Date of publication of application: 29.09.2010
(73) Proprietor: Vergokan, 9700 Oudenaarde (BE)
(72) Inventor: Ballet, Geert, B-9660, Brakel (BE); Coppens, Kurt, B-9680, Maarke-Kerkem (BE)
(74) Representative: Luys, Marie-José A.H.

(56) References cited:
- EP-A- 0 057 879
- WO-A-2006/076746

## Description

### FIELD OF THE INVENTION

This invention relates to a cable duct assembly comprising a plurality of cable ducts placed on top of each other and having substantially the same cross-section, and which are equipped to be connected to each other in the longitudinal direction without further accessories.

### BACKGROUND OF THE INVENTION

The term "cable duct" means some sort of channel or gutter provided to take up and support utility connections, such as for example electricity cables or data-cables, in a building or other installation, so that these connections may be held out of reach for unassociated persons, for example in the proximity of the ceiling of the building, so that the connections may be led safely between their start and end points. An example of a cable duct, but not restricted thereto, is a cable gutter, a wire gutter or a cable ladder.

The term "cable duct accessory" means an accessory which may be connected to a cable duct such as for example, but not restricted thereto, a horizontal cable turn, a cross piece, a vertical downward or upward cable turn, an end piece, provided to modify or maintain the track of the cable duct or of an adjacent cable duct having a similar or a different cross-section.

A cable duct assembly of nestable cable ducts is for example known from CH-A-634178. The cable duct known from CH-A-634178 has a conical shape, formed by a bottom part and two upright side parts on opposite longitudinal edges of the bottom part which extend in an angle of more than 90° with respect to the bottom part. The conical shape of the cable duct increases the strength of the cable duct, but brings the disadvantage that connecting of the cable duct with additional accessories, which usually have a non-conical 90° U-shaped cross-section, becomes more difficult. Each of the upright side parts of the cable ducts described in CH-A-634178 has an edge which is outwardly bent by 180°, or more than 180°. The thus outwardly bent edge reinforces the cable duct, but results during stacking in a limited nestability of the cable ducts stacked on top of each other. More specifically the outwardly bent edge causes the bottom of a first cable duct to be positioned at a certain distance from the bottom of a second cable duct placed thereon. This limited nestability brings the disadvantage that the storage of the cable duct requires a larger storage space, and consequently also incurs higher transportation costs. Another disadvantage of the cable duct described in CH-A-634178 is that connecting consecutive cable ducts in the longitudinal direction has to be realized by so-called coupling plates or other connection means.

EP 57879 also describes a cable duct with diverging upright side legs, of which the edge is outwardly bent and of which each cable duct element is provided with bendable lips at one end which may grab over recesses in the bent edge of a sleeve-shaped connection piece provided at the other end of the following cable duct element and wherein the first element is placed. The edge is bent for more than 90°, to thus form a flat stacking surface. As a result of this however, during stacking, the nestability of the cable duct elements remains limited, and the use of space during storage and transport is not optimum. After positioning of the first cable duct element in the second one, the lips at the edge of the first element are further bent with a pair of pliers to obtain a stable connection between the two consecutive cable duct elements, which is sufficiently loadable in as well the longitudinal direction as perpendicular thereto. This way, cable duct elements may be connected to each other without separate attachment means, which may get lost. A disadvantage of this connection is that its disconnection is complex and time-consuming and requires tools, such as pliers. The disconnected element of which the lips have been bent open again is thereby no longer identical to a new element, and because of this it is no longer useable equally well. Moreover the bendable lips in an element according to EP 57879 form sharp edges at which assembly personnel may become injured, definitely if the lips have been bent open again.

To further stabilize the connection between consecutive cable duct elements, EP 57879 further provides rectangular holes in the bottom plate at one end of the cable duct, and at the other end more bendable lips in the bottom plate, which may be bent from the bottom plate up to eventually 180° during assembly of multiple cable duct elements, to grab through the rectangular holes around a part of the bottom plate belonging to the adjacent piece of cable duct. Hereby also no additional connection piece is used, but again a tool such as a pair of pliers is required to bend the lips over such a large angle. The disconnection of a connection according to EP 57879 has thereby become even more complex and time-consuming.

Substantially fully nestable conical cable ducts are known from WO 2006/076746, wherein a flat bottom part is in longitudinal direction provided with ribs shaped like a reversed V, whereby the inner flange forms an obtuse angle with the bottom part and the outer flange forms a sharp angle with the inner flange. There is however no further explanation provided about how the cable duct elements are connected to each other.

There is thus a need for cable duct elements which may be stacked fully nestable, which may be connected to each other in the longitudinal direction without accessories and with a connection that is sufficiently loadable, and of which the connection may be disconnected without damaging or deforming the cable duct elements.

The present invention has the objective of solving the above mentioned problems or at least alleviating them, as well as providing additional improvements.

### SUMMARY OF THE INVENTION

The invention provides a cable duct assembly as is defined by one of the attached claims.

More specifically the invention provides a cable duct assembly (1) comprising a plurality of cable ducts (2, 2') having a substantially similar cross-section placed on top of each other, each of the cable ducts having a U-shaped cross-section and comprising a bottom part (3, 3') and two upward side parts (4, 5, 4', 5') provided on the opposite longitudinal edges of the bottom part (3, 3'), whereby the upward side parts (4, 5, 4', 5') extend in an angle of more than 90° relative to the bottom part (3, 3') for the formation of a conical cable duct (2, 2') whereby each of the upward side parts (4, 5, 4', 5') comprises an outwardly bent upper longitudinal edge (6, 6'), whereby the upper outwardly bent edge (6) of each of the plurality of cable ducts (2) is downwards open and is provided for accepting the outwardly bent upper longitudinal edge (6') of a cable duct (2) of the cable duct assembly (1) which is placed underneath, characterized in that the bottom part (3, 3') and/or at least one of the upward side parts (4, 5, 4', 5') of each of the plurality of cable ducts (2, 2') comprise a first (9, 9', 11, 11') and a second (10, 10', 12, 12') complementary cooperating part, whereby the first and second cooperating part extend in line with each other and at a certain distance apart from each other, and whereby the first complementary cooperating part (9, 9', 11, 11') of the cable duct is provided for accepting a subsequent second complementary cooperating part (10, 10', 12, 12') of a subsequent cable duct placed on top of the cable duct or vice versa, by sliding the cable ducts placed on top of each other, over each other over a certain distance until the first cooperating part of the bottom cable duct clicks into the second cooperating part of the cable duct placed thereon.

We have found that two cable ducts, which are separately also called cable ducts elements, from the cable duct assembly according to the present invention may very easily, without any tools and without any notable force, be connected to each other by placing them on top of each other in an appropriate way with a certain overlap and by sliding them over each other over a certain distance, thus in the longitudinal direction. This movement to obtain the connection may be provided in the direction in which the two elements move away from each other, or in the opposite direction towards each other. We prefer to provide the cooperating parts so that the connection is obtained by a movement in the direction in which the two elements move away from each other. This brings the advantage that the movement to connect a third element with the second, and the force which is thereby exerted onto the second element, is also directed in the direction which produces the connection between the first and the second element. Thereby the risk is reduced that the generation of a later connection between two cable ducts elements would weaken or loosen a previously obtained connection.

An additional advantage of the cable duct elements from the cable duct assembly according to the present invention is that the cable duct elements may be produced very easily. The invention thus provides a method for the production of a cable duct for the cable duct assembly according to any of claims 1-14 characterized in that it comprises at least one punching step, preferably only one punching step.

The advantage is that no further shaping step is necessary other than one single punching step on one piece of steel plate, to obtain a cable duct or a cable duct element according to the present invention, which may be stored and transported in a space saving manner, and which may also be installed without further assembly elements.

### SHORT DESCRIPTION OF THE DRAWINGS

Figure 1 shows a front view of an embodiment of a stacking of a cable duct assembly according to the invention.
Figure 2 shows a cross-section of an embodiment of a cable duct or a cable duct element of a cable duct assembly according to the invention.
Figure 3 shows an embodiment of a connection of two cable ducts of a cable duct assembly according to the invention in the longitudinal direction through complementary cooperating means provided on the upward side parts of the cable ducts.
Figure 4 shows an embodiment of two cable ducts of a cable duct assembly according to the invention in a non-nested state.
Figure 5 shows a connection of consecutive cable ducts in the longitudinal direction installed in the upward side parts part by a foldable clip through longitudinal slits.
Figures 6A-6B show a slit and a cooperating recess (in non-bent state) provided in the bottom part of the cable duct.
Figure 7 shows a slit and a cooperating recess (in bent state) provided in the bottom part of the cable duct.
Figure 8 shows an embodiment of a connection piece according to the invention.
Figure 9 shows an embodiment of a connection between a connection piece according to the invention connecting a conical cable duct on one hand, and a U-shaped downward cable turn on the other hand.
Figure 10 shows an embodiment of a connection between a connection piece according to the invention connecting a conical cable duct on one hand, and a U-shaped upward cable turn on the other hand.
Figure 11 shows a cable duct according to one embodiment which is clicked into a second cable duct according to that same embodiment.
Figure 12 shows how in the cable ducts of figure 11, one or multiple lips may be shaped as second complementary cooperating part or parts by providing U-shaped recesses in the upward side parts of the cable duct.
Figure 13 shows how the two cable ducts from figure 11 may be clicked into each other by means of the cooperation of their complementary cooperating parts.
Figure 14 shows one of the ends of a preferred embodiment according to the present invention.

### DETAILED DESCRIPTION

One goal of the invention is achieved because in the cable duct assembly according to the present invention the outwardly bent upper longitudinal edge of each of the plurality of cable ducts is downwards open and is provided for accepting the outwardly bent upper longitudinal edge of a cable duct of the cable duct assembly which is placed underneath.

A cable duct according to the invention thereby has the advantage that the cable duct is substantially fully nestable. 'Substantially fully nestable' means that the cable ducts are to a larger degree nestable in each other as compared with a fully bent edge and that the bottom parts of cable ducts placed on top of each other end up at a negligible distance from each other and/or substantially in contact with each other. More specifically the distance between consecutive bottom parts of cable ducts placed on top of each other is smaller than the height of the bent longitudinal edge, i.e. the vertical distance between the lower end of the bent edge and the higher part of the bent edge. The substantially fully nesting of consecutive cable ducts may be realized by placing the outwardly bent edges of a first cable duct onto the outwardly bent edges of a cable duct which is positioned underneath in such a way that they substantially touch each other.

This substantially full nestability has the advantage that the required storage space for the cable ducts may be reduced. Because of this reduced storage space, the transportation costs may also be reduced substantially.

Another advantage of the cable duct assembly according to the invention is that the connecting of cable ducts in the longitudinal direction may be simplified. The connecting of consecutive cable ducts in the longitudinal direction may be realized by appropriately positioning cable ducts on top of each other and subsequently connecting the adjacent cable ducts to each other.

Because the bottom parts of cable ducts placed on top of each other substantially touch each other, it is not necessary to provide additional coupling plates. It is sufficient to slide or position adjacent cable ducts relative to each other such that their bottoms partially overlap and subsequently connect them to each other. This at least partial overlap moreover provides the entire assembly with additional strength.

Because the degree of overlap is directly related to the load-bearing capacities of the entire assembly, the load-bearing capacities of the entire assembly may be very easily modified by increasing or decreasing the degree of overlap, in other words by sliding the bottoms over each other to a higher or lesser degree.

After correctly positioning the cable ducts, the connection may subsequently be accomplished by complementary cooperating means provided in the bottom parts and/or upward side parts of adjacent cable ducts, which is possible thanks to the good nestability of the cable duct elements according to the present invention. Because this does not require additional assembly elements, this way of connecting is strongly preferred above the use of a separate attachment element applied through at least partially overlapping slits provided in the bottom parts and/or upward side parts of adjacent cable ducts.

In an embodiment of the present invention the cable duct assembly is further characterized in that the first complementary cooperating part is a slot (11, 11') and the second complementary cooperating part is a bendable recess (12, 12') extending from the plane of the bottom part and/or at least one of the upward side parts. This brings the advantage that it allows providing the two cooperating parts in the same shaping step of the cable duct element, such as for example in a single punching step of steel plate.

In an embodiment of the present invention, the cable duct assembly is further characterized in that the first complementary cooperating part is a slot (9, 9') and the second complementary cooperating part is a protruding part (10, 10') extending from the plane of the bottom part and/or at least one of the upward side parts. This brings the advantage that these cable duct elements may still be obtained in one single shaping step, and also provides a result whereby the two cooperating parts grab into each other more easily and more readily, so that the connection between the two consecutive cable duct elements of the cable duct assembly of the present invention may be realized more quickly and may need a lower number of tries before the right contact between the cooperating parts is obtained.

In an embodiment of the present invention, the cable duct assembly is further characterized in that the first complementary cooperating part (9, 9') is formed by an L-shaped recess or slot in the upward side part. This brings the advantage that the lip which is formed by the inner corner of the L-shaped recess is stronger, as a result of which the connection between two consecutive cable duct elements becomes stronger and less movable.

In this embodiment with the L-shaped recess or slot, the cable duct assembly may be further characterized in that, at the first complementary cooperating part (9, 9'), the lip, formed by the inner corner of the L-shaped recess in the upward side part, protrudes from the plane of the upward side part. This gives the additional advantage that the lip which is already enforced by the L-shape of the recess, remains easily catchable for the corresponding cooperating part of the following cable duct with which the connection is to be made.

In an embodiment of the present invention, the cable duct assembly is also characterized in that the second complementary cooperating part (10, 10') is a lip which is formed by a U-shaped recess in the upward side part. This brings the advantage that the lip may easily protrude from the plane into which it is provided, and because of this it may easily be caught by the corresponding cooperating part in which it is intended to be clicked.

In an embodiment of the present invention, the cable duct assembly is further characterized in that the second complementary cooperating part (50, 50') is formed by an L-shaped recess in the upward side part. This brings the additional advantage that the lip which is now formed by the L-shape, is reinforced, for example compared to a lip shaped by a U-shaped recess, but remains easily catchable for the corresponding cooperating part of the subsequent cable duct. Preferably both cooperating parts have the shape of lips formed by L-shaped recesses. This brings the advantage of easy catchability together with a large contact surface between the lips, an increased strength and stability of the two lips, and thus an increased strength of the connection itself.

In an embodiment of the present invention, the cable duct assembly whereby the second complementary cooperating part (50, 50') is formed by an L-shaped recess in the upward side part, is further characterized in that at the second complementary cooperating part (50, 50'), the lip, shaped by the inner corner of the L-shaped recess in the upward side part, protrudes from the plane of the upward side part. This brings the advantage that the catchability of the two cooperating parts is further increased, and whereby also the contact surface between the two cooperating parts may be increased and even the strength of the connection itself may be increased. Moreover the two cooperating parts obtain a larger sideward freedom of movement within which they may still grab into each other, but as they are being slid into each other, this sideward freedom of movement decreases until they have no more sideward freedom of movement at the moment that they eventually click into each other and the connection receives its full sideward strength, as a result of which it may be loaded more before it may yield to the load.

In an embodiment of the present invention, the cable duct assembly is further characterized in that the bottom part (3, 3') and/or at least one of the upward side parts (4, 5, 4', 5') of each of the plurality of cable ducts (2, 2') comprises a plurality of longitudinal slits (14, 14'). This offers a reduction in weight for the cable duct elements, so that the manipulation of the cable ducts may be simplified, and this without loss of strength, but it also offers attachment points to easily attach other objects if so desired, and at the ends where necessary it offers the possibility to nevertheless connect other cable duct elements or connection pieces which do not possess the appropriate cooperating parts according to the present invention, using the appropriate assembly accessories, as a result of which the connection pieces specifically intended therefore such as described below, may not always be required.

In an embodiment of the present invention, the cable duct assembly with the longitudinal slits (14, 14') provided in the bottom part (3, 3') and/or at least one of the upward side parts (4, 5, 4', 5') is further characterized in that at least a portion of the longitudinal slits (14, 14'), and preferably a portion of these in the bottom part (3, 3'), comprise at least partially bent edges. We have found that slits having at least partially bent edges provide additional strength to the plate into which the slits are provided, more specifically an increased resistance against torsion. Our preference is to bend the full edge at the slits with bent edges, to obtain the greatest effect possible. We have found that when some slits (14, 14') in the bottom part have bent edges, this deteriorates hardly or not at all the nestability and the stackability, while this effect however may be present, or be larger, if slits in the side parts have bent edges.

In an embodiment of the present invention, the cable duct assembly with the longitudinal slits (14, 14') with at least partially bent edges is further characterized in that the edges of the longitudinal slits (14, 14') are always bent to the same side on corresponding places in the different cable ducts. By always bending the edges to the same side, the cable duct elements remain easily nestable and thus stackable in a space saving manner, but they do obtain a higher resistance to torsion. It is our preference to each time bend the full edge in the slits with at least partially bent edges, so that the resistance against torsion is increased. We prefer to each time provide this bending to the outside, because this is easier for the shaping and the production of the mould.

In a preferred embodiment of the present invention, the cable duct assembly is further characterized in that at least one of the upward side parts (4, 5, 4', 5') of each of the plurality of cable ducts (2, 2') comprises a plurality of longitudinal slits (7, 7'). This offers a reduction in weight for the cable duct elements, so that manipulation of the cable ducts is simplified, and this without giving up strength, but it also offers attachment points to easily attach other objects, if desired, and at the ends where necessary it offers the possibility to nevertheless connect other cable duct elements or connection pieces, which may not possess the appropriate cooperating parts according to the present invention, using the appropriate assembly accessories, as a result of which the connection pieces specifically intended therefore as described below, may not always be required.

In an embodiment of the present invention, the cable duct assembly is further characterized in that the bottom part (3, 3') and/or at least one of the upward side parts (4, 5, 4', 5') of each of the plurality of cable ducts (2, 2') is provided with at least one locking lip (15, 15', 51) to secure the clicked state of two cable ducts elements, for example because the locking lip (15, 15') of one cable duct is directed horizontally and is provided such that it engages in that clicked state against a vertical inner edge of a recess provided in the other cable duct. This brings the advantage that the connection between the cable duct elements in the longitudinal direction may be locked or secured, in such a way that it may not be disconnected easily, and preferably not without manual intervention with an appropriate tool, such as a screw driver for loosening the locking lip or lips from its or their locked position. This locking lip also provides additional strength to the connection between two cable ducts, so that this may be loaded more before it moves or yields under the load.

In the embodiment with the locking lip, the cable duct assembly may be further characterized in that the locking lip (15, 15') is formed by a U-shaped recess in the plane wherein it is provided and protrudes from this plane. In the example of a horizontal locking lip, it may thus be formed by a recess shaped like a U on its side. This provides a wider freedom of movement to the end of the locking lip, which may for example be important in connections which one expects to need disconnecting several times. In this embodiment, we prefer to slightly twist the locking lip with respect to the plane into which it is provided, to thus more easy engage with the stop provided in the other cable duct. This increases the chance that the locking lip will be able to fully execute its function, and decreases the chance that the locking lip, for example under an increased load, would slide beside the provided stop and would partially or even completely loose its function. It also increases the strength of the connection.

In the embodiment with the locking lip, the cable duct assembly may further also be characterized in that the locking lip (51) is formed by an L-shaped recess in the plane into which it is provided and in that the lip, which is formed by the inner corner of the L-shaped recess in the upward side part, protrudes from this plane. In this embodiment the locking lip has an increased strength, and it may less easily spring away and loose its function partially or entirely. By protruding the locking lip with the shape of a triangle, the stop line of the locking lip cuts the plane of the locking lip, and the same effect is obtained as with the twisted locking lip formed by the U-shaped recess as is described herein above.

In an embodiment of the present invention, the cable duct assembly is further characterized in that at least one of the upward side parts (4, 5, 4, 5') of each of the plurality of cable ducts (2, 2') is provided with a stop (52) suitable for locking the outer rim of at least one of the upward side parts (4, 5, 4', 5') of the cable duct to be received when clicking. If provided appropriately, such a stop brings an additional resistance and security against the re-sliding apart from each other of the clicked cable duct elements according to the present invention, or against movement under a load, as a result of which the strength of the connection is further increased. Preferably we provide such a stop (52) in both side parts (4, 5, 4', 5'). It is also our preference to install such a stop (52) as high as possible, in other words as far as possible above the bottom part (3, 3') and as close as possible to the rolled rim (6, 6') of the cable duct.

The cable duct according to the invention may further comprise a plurality of slits in each of the upward side parts and/or in each of the bottom parts, preferably longitudinal slits. These slits allow to realize a connection of adjacent cable ducts. As an example, but not restricted thereto, adjacent cable ducts may be further connected to each other providing, through at least partially overlapping slits of adjacent cable ducts, a separate assembly element and securing it. This assembly element may be any element deemed suitable by the person skilled in the art, for example a foldable clip or a screw-connection. This connection may serve as an additional connection and reinforcement of the entire assembly.

In an embodiment of the cable duct according to the invention, the bottom part and/or at least one of the upward side parts of each of the plurality of cable ducts comprises a first and second complementary cooperating part, whereby the first and second cooperating part extend in line with each other and at a certain distance apart from each other. The first cooperating part of a first cable duct is hereby provided for accepting the second cooperating part of an adjacent second cable duct. The connecting in the longitudinal direction of adjacent cable ducts may be achieved by sliding cable ducts, placed on top of each other, over each other over a certain distance until the first cooperating part of the lower cable duct clicks in the second cooperating part of the cable duct placed thereon. This connection may serve as the only connection or as an additional connection and reinforcement of the entire entity.

Another aspect of the invention has the objective of providing a connection piece for simplifying the connection of a conical cable duct with a non-conical U-shaped cable duct accessory in the longitudinal direction.

Because the upward side parts of existing connection pieces usually have a uniform cross-section, for example either conical or 90° U-shaped, a connection by these connection pieces between parts with a different cross-section may only be realized by cutting the connection pieces on site in such a way that the connection may be realized. This is labour intensive. The cutting of the connection pieces moreover brings the disadvantage that the strength of the entire entity is adversely influenced.

To solve this problem, the cable duct assembly according to the present invention may be further extended with a connection piece.

This connection piece comprises a connection piece bottom part having at least one end and a second end, with each time two upward connection part side parts provided on opposite longitudinal edges of the connection part bottom part. The upward connection piece side parts on the first end extend in an angle of more than 90° with respect to the connection piece bottom part and thus form a conical section of the connection piece. The upward connection piece side parts of the second end extend in an angle of substantially 90° with respect to the connection piece bottom part and form a straight, i.e. a substantially 90° U-shaped, section of the connection piece.

The conical section of the connection piece is provided for connecting with an adjacent conical cable duct in the longitudinal direction. This conical cable duct may be any conical cable duct considered suitable by the person skilled in the art, but is preferably a conical cable duct as is used in the cable duct assembly according to the first aspect of the invention. Thereto the conical section is adapted to the conical shape of the conical cable duct and substantially fully nestable in at least one section of the adjacent cable duct, meaning that the first end of the connection piece may be positioned with its bottom part at a negligible distance from the bottom part and/or may be slid and positioned in direct contact with the bottom part of the adjacent conical cable duct or vice versa. The connection between the connection piece and the conical cable duct may be realized by sliding and moving at least a part of the first end with its bottom part onto or under the bottom part of the adjacent conical cable duct, and subsequently connecting both pieces. The at least partial overlap between the bottom parts of the connection piece and the cable duct results in an increase of the load-bearing capacities of the assembled entity.

This connection may be realized in any way considered suitable by the person skilled in the art. More specifically the connection may be realized in the same way or in a different way as compared to the connection between two adjacent cable ducts according to the present invention.

The upward side parts of the first end of the connection piece may for example comprise an outwardly bent upper longitudinal edge which is downwards open and is provided for accepting at least a part of the outwardly bent upper longitudinal edge of the adjacent cable duct or vice versa. The connection between the first end of the connection piece and the conical cable duct may then be achieved by sliding the connection piece with at least a part of its upper edge over the upper edges of the cable duct and locking it, or vice versa.

If both the first end of the connection piece andthe adjacent cable duct comprise recesses in their bottom part and/or their upward side parts, the connection may for example also be realized by at least partially sliding over each other of the bottom parts of the connection piece and of the cable duct until at least one of their respective recesses overlap. The connection may subsequently be realized through one or more assembly elements which are slid through these corresponding recesses, whereby the assembly element is for example a separate bendable clip part or a screw connection.

The connection may for example also be realized through cooperating connection means provided on the conical part of the connection piece and the conical cable duct, for example on their bottom parts and/or upward side parts. These cooperating connection means may for example be realized by a cooperating recess and groove or a tooth-groove connection.

The connection may also be realized by a combination of a number of these different connection means.

Analogously the straight part of the connection piece may be adapted to the shape of the cable duct accessory and may be substantially fully nestable in a part of the adjacent cable duct accessory or vice versa, meaning that the second end of the connection piece may be positioned with its bottom part at a negligible distance from the bottom part of the adjacent cable duct accessory and/or may be slid and positioned in direct contact with the bottom part of the adjacent cable duct accessory, or vice versa. The connection between the connection piece and the adjacent cable duct accessory may then be realized by sliding and moving at least a part of the second end with its end part onto or under the bottom part of the adjacent cable duct accessory, and subsequently connecting both elements. The at least partial overlap between the bottom parts of the connection piece and the adjacent cable duct accessory results in an increase of the load-bearing capacities of the entire assembly.

Preferably the bottom part of the second end of the connection piece is positioned onto the bottom part of the adjacent cable duct accessory when the bottom part of the first end of the connection piece is positioned under the bottom part of the adjacent cable duct or vice versa. This results in an additional reinforcement of the connection between the different parts.

Once in position, the connection between the second end of the connection piece and the adjacent cable duct accessory may subsequently be realized in any way considered suitable by the person skilled in the art, which may be identical or different from this between the first end of the connection piece and the adjacent cable duct.

The presence of the two sections of the connection piece having different cross-sections thus simplifies the connection of two parts having different cross-sections. It is sufficient to slide the different sections over each other and positioning them and subsequently connecting them, without the requirement of additionally cutting into one of the parts.

Preferably the outwardly bent edge of the connection piece and/or the conical cable duct according to the invention may be bent in an angle of less than 180° to provide the full nestability of the connection piece and/or the conical cable duct with a following cable duct.

Preferably the conical cable ducts and/or the connection piece are manufactured in bent metal plate, preferably steel plate. In another embodiment these objects are produced from another material which has the required characteristics to make the connection between subsequent cable ducts and to give this connection sufficient strength. Polyvinyl chloride (PVC) may be suitable, but also many other polymers, such as for example polypropylene (PP) may serve this purpose.

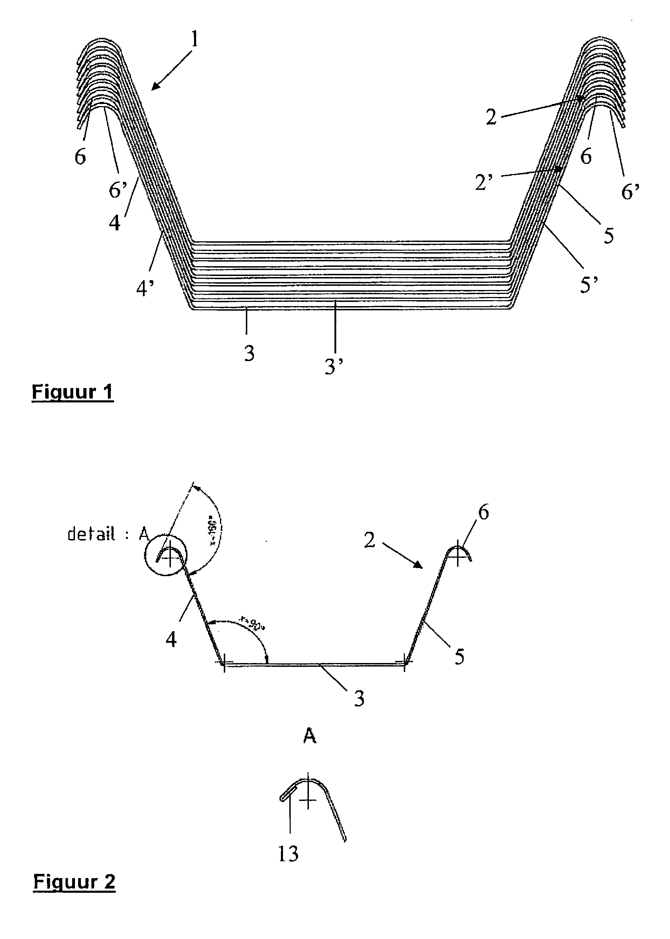

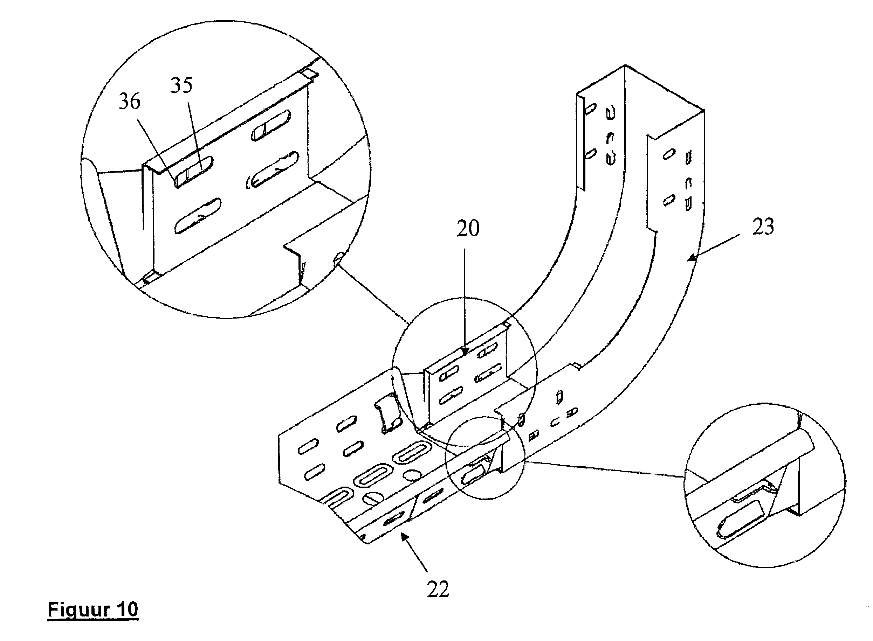

The invention is further illustrated by figures 1-14.

The cable duct assembly 1 shown in figure 1 comprises a plurality of cable ducts 2, 2' placed on top of each other with substantially similar cross-sections. Each of the cable ducts 2, 2' of the cable duct assembly comprises a bottom part 3, 3' and two upward side parts 4, 4', 5, 5' provided on opposite longitudinal edges of the bottom part. The upward side parts 4, 4', 5, 5' extend in an angle of more than 90° with respect to the bottom part 3, 3' so that a conical cable duct 2, 2' is formed. Each of the upward side parts 4, 5 of a cable duct 2 comprises an outwardly bent upper longitudinal edge 6 which is downwards open and is bent so that it may accept the outwardly bent upper longitudinal edge 6' of a cable duct 2' of the cable duct assembly 1 placed underneath.

By appropriately bending the upper longitudinal edge 6, 6' of the cable ducts, the cable ducts 2, 2' are substantially fully nestable. As may be seen on figure 1, the distance between consecutive bottom parts 3, 3' of the cable ducts 2, 2' placed on top of each other, is much smaller than the height of the bent edge. The distance between consecutive bottom parts is in other words negligible with respect to the height of the bent edge.

To obtain a substantially full nestability of the cable ducts 2, 2', the outwardly bent upper longitudinal edge 6, 6' is preferably bent in an angle in the range between 90° and 180° as is shown in figures 1 and 2.

The outer edge of the outwardly bent upper longitudinal edge is preferably further folded inwardly for the formation of an inwardly folded end part 13 as is shown in detail A of figure 2. This inwardly folded end part creates a rounded lower edge part so that the risk for cutting wounds, upon sliding or grabbing the cable ducts, is reduced. Preferably the inwardly folded end part 13 is bent in an angle of 180° as is shown in detail A of figure 2, so that the end part doesn't have an adverse effect on the nestability of consecutive cable ducts. Optionally the inwardly folded end part 13 may be bent in an angle which is slightly smaller than 180°. Preferably the inwardly bending, and more specifically the inwardly bending of more than 180°, of the upper longitudinal edge is only done with thin plate thicknesses (a thickness of 0.6 mm or less). For the thicker plate thicknesses the outer edges of the outwardly bent upper edges are preferably rounded so that the risk for cutting wounds during manipulation of the cable ducts is reduced.

Because the bottoms 3, 3' of the cable ducts 2, 2' placed on top of each other substantially fully touch each other, no additional coupling plates are required for the longitudinally connecting two cable ducts 2, 2'.

The connection of two cable ducts 2, 2' in the longitudinal direction to each other, may be realized in different ways.

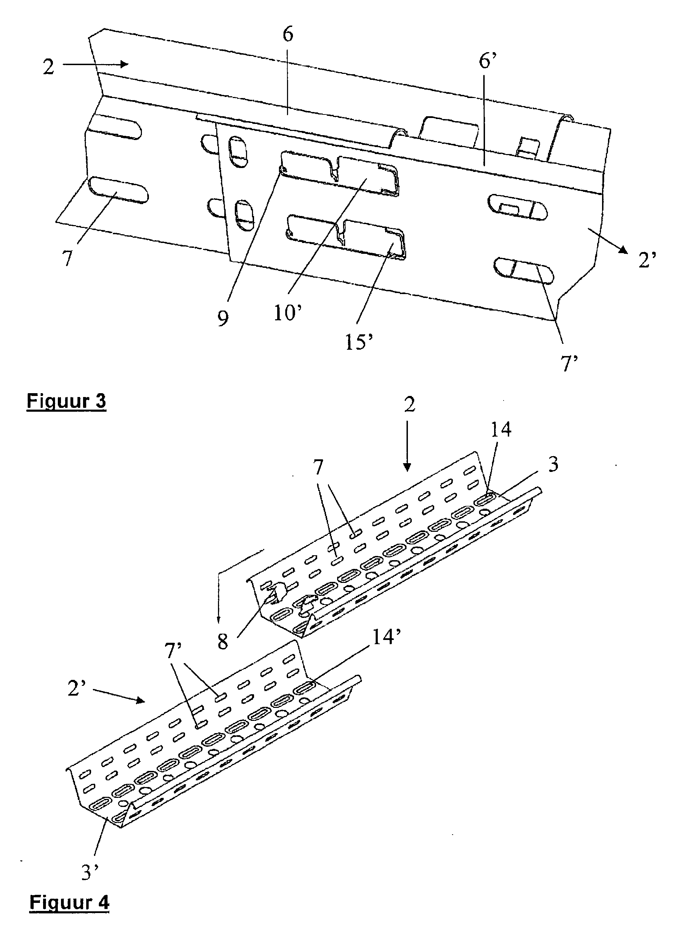

In a first step the cable ducts 2, 2' are preferably positioned with respect of each other in such a way that their bottoms partially overlap each other as is shown in figure 3. The partial overlap reinforces the entirety and assists in the load-bearing capacities of the entire assembly.

After correctly positioning the cable ducts with respect to each other, the cable ducts have to be connected to each other in a subsequent step.

In figure 3, the upward side parts of each of the cable ducts comprise for that purpose a longitudinal slot and a protruding part in line with the slot and placed at a certain distance thereof. The longitudinal slot 9 of a first cable duct 2 is provided for accepting the protruding part 10' of a cable duct 2' placed thereon or underneath, as a result of which a connection between the cable ducts is realized. The protruding part 10' shown in figure 3 comprises a protruding clip part extending outside the cable duct and upwards, which fits around a first edge of the longitudinal slot on one hand, and on the other hand a clip part 15' protruding outside the cable duct and away from the slot in the longitudinal direction. The protruding parts 10' may be pre-shaped as shown in figure 3. Optionally, the upward side parts may comprise one or more recesses, which extend in the same plane as the upward side parts and which may be pushed outside or inside by the user after appropriately positioning consecutive cable ducts, so that one or more protruding parts may be formed, as some sort of locking lip 15', and a connection between the cable ducts may be realized.

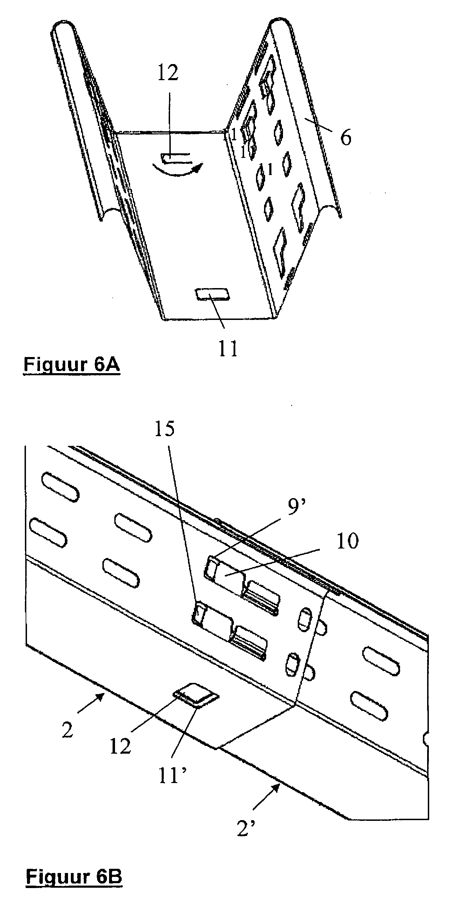

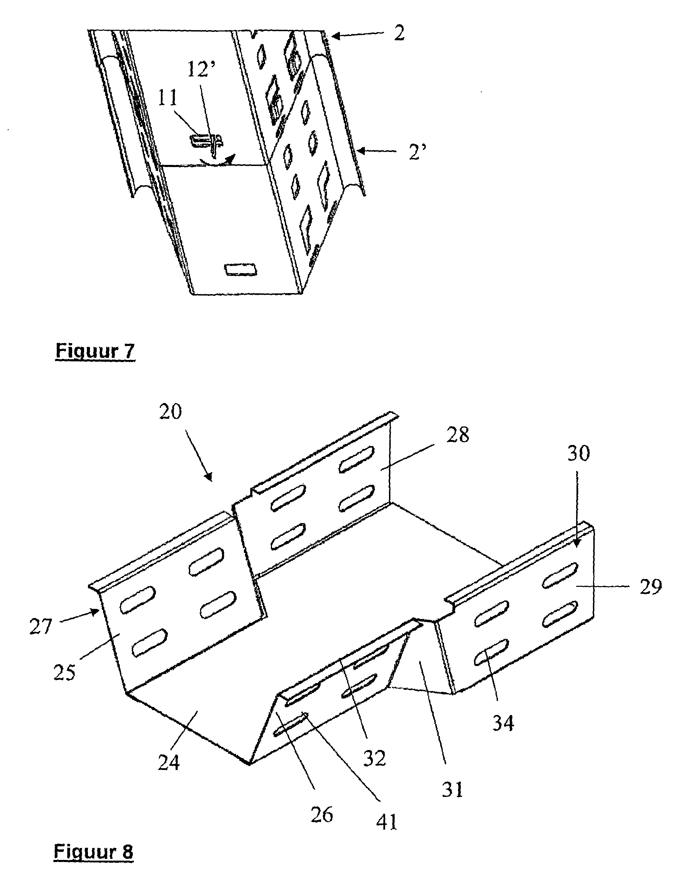

In figures 6 and 7, an alternative or additional method is shown for connecting consecutive cable ducts in the longitudinal direction. The bottom part of the cable duct shown in figure 6 comprises for that purpose a bottom slot and a complementary recess in line with the bottom slot and at a certain distance thereof. In a first step the cable ducts 2, 2' are positioned with respect to each other in such a way that the bottom slot 11 and complementary bottom recess 12' partially overlap as shown in figure 6. In a next step, the recess is subsequently bent 180° outwards or inwards to realize the connection as shown in figure 7.

Generally the bottom parts 3, 3' and/or one or both upward side parts 4, 4', 5, 5' of each of the cable ducts 2, 2' comprise a first 9, 9', 11, 11' and second 10, 10', 12, 12' cooperating part, whereby the first 9, 9', 11, 11' and second 10, 10', 12, 12' cooperating part extend in line with each other and at a certain distance from each other, and whereby the first complementary cooperating part 9, 11 of the cable duct 2 is provided for accepting a subsequent second complementary cooperating part 10, 12 of a subsequent cable duct 2' placed on top of the cable duct 2. The first and second complementary cooperating part may for example be a recess and a protrusion, a slot and a protrusion or any other means considered suitable by the person skilled in the art. Preferably the first and second cooperating part extend in the same plane of the bottom parts or upward side parts, so that the sliding of consecutive cable ducts over each other or the taking apart of cable ducts isn't hindered. In figure 6B a locking lip 15 is also shown according to a preferred embodiment of the present invention.

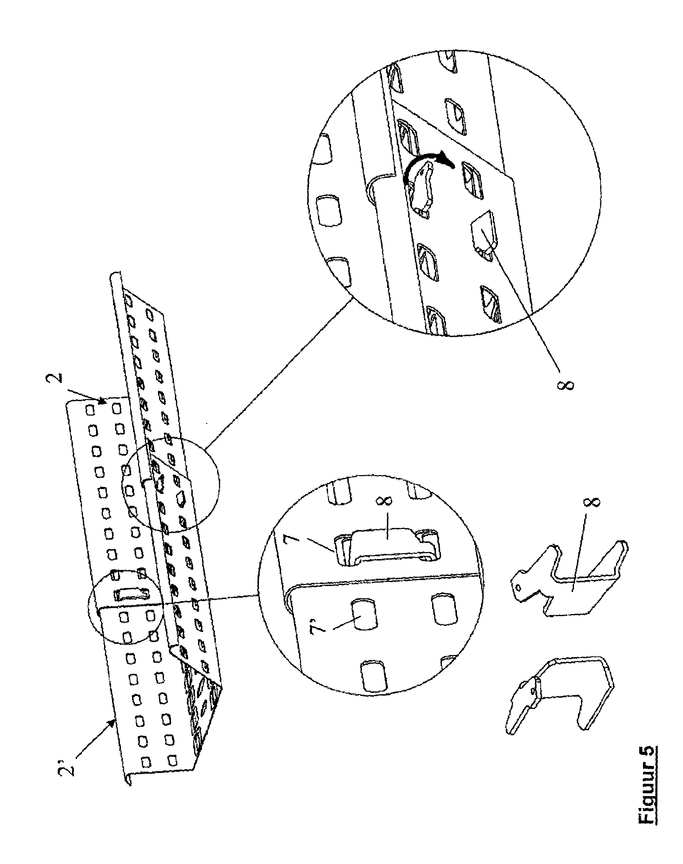

In figures 4 and 5 an alternative or additional method is shown for connecting consecutive cable ducts 2, 2' in the longitudinal direction. The upward side parts of each of the plurality of cable ducts comprise for that purpose a plurality of slits 7, 7', preferably longitudinal slits. Preferably the upward side parts of each of the plurality of cable ducts comprise two rows of longitudinal slits placed one above the other, as is shown in figure 4. In a first step shown in figure 4, a first cable duct 2 is partially positioned with its bottom part 3 on the bottom part 3' of a second cable duct 2'. The positioning is such that there is an overlap between consecutive slits 7, 7' of both cable ducts as is shown in figure 5. In a second step a separate clip 8 is subsequently inserted and connected through at least one of the overlapping slits 7, 7'. In figure 5 a clip 8 made from bendable material is shown which may be bent after insertion through the slits 7, 7' against the upward side parts to realize a strong connection. The clip shown in figure 5 is inserted through two couples of overlapping slits positioned one above the other, and is subsequently folded to realize the connection. The clip functions as an attachment or assembly element. Alternatively for example also a screw connection may be used as an assembly element or any other type of attachment or assembly element considered suitable by the person skilled in the art. Figure 4 also shows longitudinal slits 14, 14' in the bottoms or bottom parts 3, 3' of another embodiment of the present invention. A part of these slits 14, 14' preferably has at least partially bent edges, and more preferably the entire edges of the slits having bent edges are bent. We prefer to provide this bending each time to the same side, either to the inside or to the outside, so that the nestability of the cable ducts is preserved, and thus also the space-saving stackability. Our preference goes to bending the edges of slits as is shown in Figure 4, and to each time make this bending outwardly, because this is easier in the shaping and in the production of the mould.

Generally the use of a separate clip 8, or generally an attachment or assembly element, through at least one couple of overlapping slits 7, 7' brings the advantage that during the fist step the sliding of consecutive cable ducts with respect to each other or the taking apart of cable ducts to obtain a correct positioning, isn't hindered. The clip may be inserted through one couple of overlapping slits 7, 7' and be connected. Preferably the clip 8 is inserted through two adjacent couples of slits 7, 7' and connected such that a stronger connection is realized. Preferably the clip 8 is made from a foldable or bendable material, so that after inserting the clip 8 through the slits 7, 7', the clip 8 may be bent to realize a stronger connection.

Figure 8 shows an embodiment of a connection piece 20 according to a second aspect of the invention. The connection piece 20 shown in figure 8 comprises a connection piece bottom part 24 and two upward connection piece side parts 25, 26, 28, 29 provided on opposite longitudinal edges of the connection piece bottom part. The connection piece side parts comprise a first 25, 26 and second 28, 29 end positioned on opposite longitudinal ends of the connection piece bottom part 24. The upward connection piece side parts 25, 26 of the first end extend in an angle of more than 90° with respect to the connection piece bottom part and thus form with the connection piece bottom part a conical section 27. The upward connection piece side parts 28, 29 of the second end extend in an angle of substantially 90° and form with the connection piece bottom part 24 a straight U-shaped part 30.

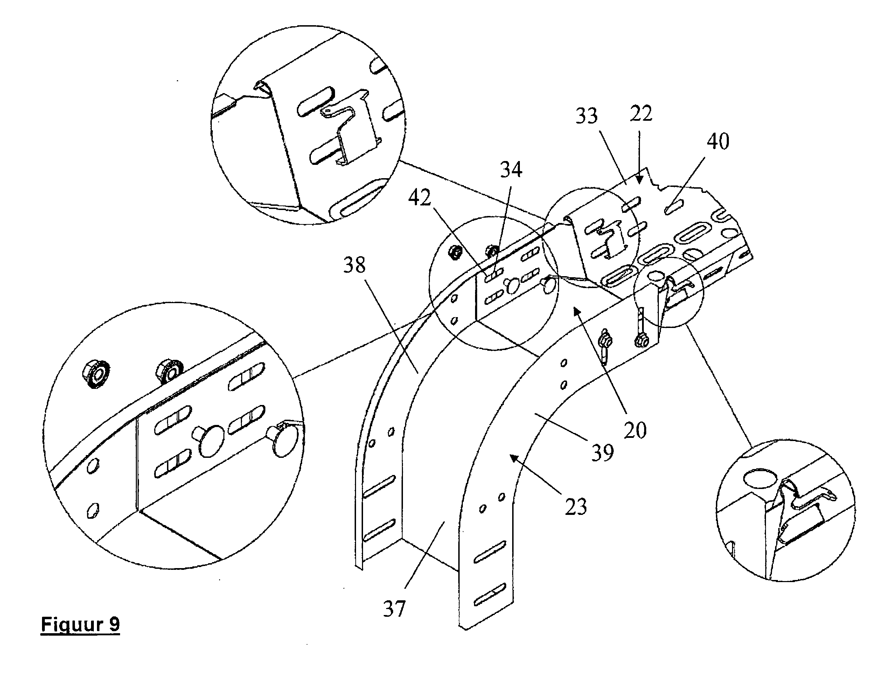

The connection piece 20 shown in figure 8 is provided for connecting a conical cable duct 2, 2', 22 with a cable duct accessory having a straight U-shaped cross-section 23. The conical part 27 of the connection piece 20 is adapted to the shape of the conical cable duct 22 and is substantially fully nestable underneath a part of the adjacent conical cable duct 22 as is shown in figure 9. Optionally the conical part 27 of the connection piece 20 may also be placed on a part of the adjacent cable duct 22. The U-shaped straight part 30 of the connection piece 20 is adapted to the shape of the cable duct accessory 23 and is substantially fully nestable on a part of the adjacent cable duct accessory 23 as is shown in figure 9. Optionally the straight part 30 of the connection piece 20 may also be placed underneath a part of the adjacent cable duct accessory 23.

The upward side parts 25, 26 of the conical part 27 of the connection piece 20 shown on figure 8 comprise an outwardly bent upper longitudinal edge 32 which is downwards open and is provided for accepting at least a part of the outwardly bent upper longitudinal edge 33 of a conical cable duct 22 placed on the connection piece. Optionally the outwardly bent upper longitudinal edge 32 of the conical part 27 of the connection piece 20 may alternatively be slid underneath the edge 33 of the conical cable duct 22.

The connection between the conical part 27 of the connection piece 20 and the conical cable duct 22 may be realized in any way considered suitable by the person skilled in the art. More specifically any type of connection is possible such as between two adjacent conical cable ducts of a cable duct assembly according to a first aspect of the invention.

To realize a connection between the conical part 27 of the connection piece 20 and the conical cable duct 22, the upward side parts 25, 26 of the conical part 27 preferably comprise at least one slit 41, for example a longitudinal slit as is shown in figure 8, and the upward side parts of the conical cable duct 22 also comprise at least one complementary slit 40. To realize a connection, the connection piece 20 needs to be placed onto or underneath the conical cable duct 22 with at least a part of its conical part 27, in such a way that both complementary slits 40, 41 at least partially overlap as shown in figure 9. In a subsequent step, both elements may be connected by inserting an additional attachment or assembly element through at least one couple of overlapping slits and clamping it as shown in figure 9.

Analogously to the connection between subsequent conical cable ducts of a cable duct assembly according to a first aspect of the invention, the connection between the conical part 27 of the connection piece 20 and the conical cable duct 22 may be realized by a third and fourth complementary cooperating part provided on the bottom parts and/or the upward side parts, whereby the third and fourth cooperating parts may be any element considered suitable by the person skilled in the art, such as for example a cooperating slot and protruding part or a cooperating slot and recess.

The upward side parts of the straight U-shaped section 30 of the connection piece 20 shown in figure 8 comprise an inwardly bent upper longitudinal edge that provides the connection piece with additional strength.

The connection between the straight U-shaped section 30 of the connection piece 20 and the cable duct accessory 23 may be realized in any way considered suitable by the person skilled in the art. More specifically any type of connection is possible such as between two adjacent conical cable ducts of a cable duct assembly according to a first aspect of the invention or such as between the conical part of the connection piece and an adjacent conical cable duct.

To realize a connection between the straight U-shaped section 30 of the connection piece 20 and the cable duct accessory 23, the upward side parts 28, 29 of the straight part preferably comprise at least one slit 34 and the upward side parts of the cable duct accessory also comprise at least one slit 42, as is shown in figure 9. To realize a connection, the connection piece needs to be placed on top of or underneath the bottom part of the cable duct accessory with at least a part of the bottom part of its straight section, in such a way that both slits at least partially overlap as is shown in figure 9. In a next step, both elements may be connected by inserting and locking an attachment element through at least one couple of overlapping slits, for example by inserting a screw through at least one couple of overlapping slits and screwing it down with a nut as is shown in figure 9 or by use of a clip or any other element considered suitable by the person skilled in the art.

Analogously to the connection between consecutive conical cable ducts, the connection between the straight section 30 of the connection piece 20 and the cable duct accessory 23 may be realized by a fifth 35 and sixth 36 complementary cooperating part provided on the bottom parts and/or upward side parts, whereby the fifth and sixth cooperating parts may be any element considered suitable by the person skilled in the art, such as for example a cooperating slot and protruding part or a cooperating slot and recess.

Preferably the positioning of the connection piece 20 with respect to the cable duct 22 and the connection piece accessory 23 is realized in an alternating way, meaning that the bottom part of the conical section of the connection piece is positioned underneath the conical cable duct and the bottom part of the straight section of the connection piece onto the cable duct accessory as shown in figure 9 or vice versa. Such an alternating positioning results in a stronger assembly having an increased load-bearing capacity.

The connection piece 20 shown in the figures is a straight connection piece with two ends, of which one is conically and one is non-conically, connected to each other by a third part 31. Analogously within the frame of the invention, also bent or cornered connection pieces with two ends are possible, or connection pieces with three or more ends, such as for example a T-part with one conical and two non-conical ends, a T-part with two conical and one non-conical part, a crosspoint piece with four ends, of which at least one conical and at least one non-conical, to cross two cable ducts with each other, etc.

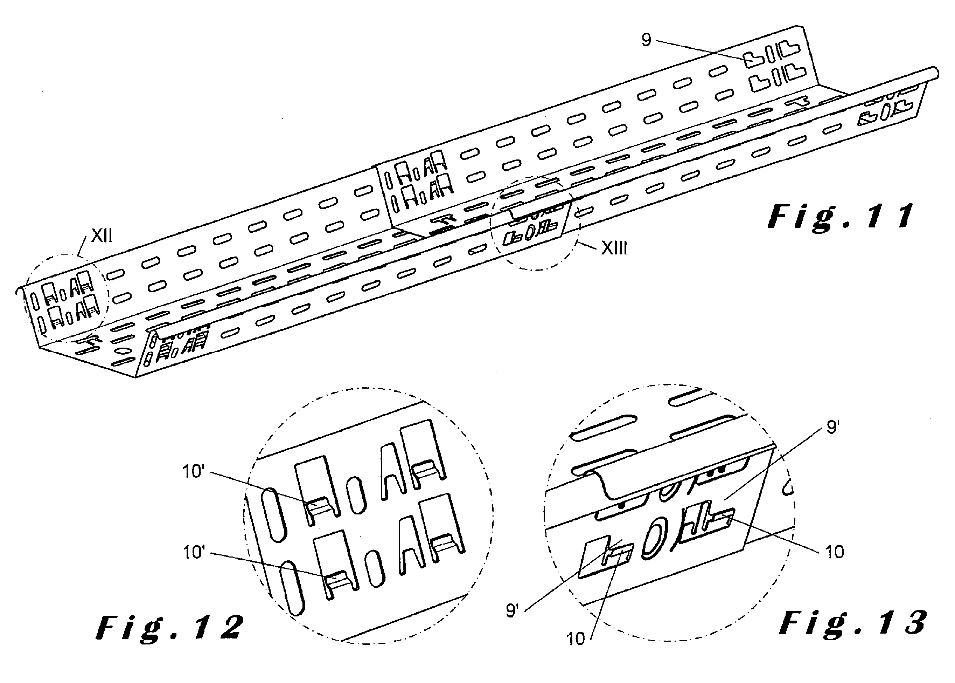

Figure 11 shows a connection between a first cable duct according to one embodiment which is clicked in a second cable duct according to that same embodiment. In figure 11, L-shaped recesses 9 are shown of which the inner corner forms a solid lip as the first of the complementary cooperating parts according to the present invention. Figure 1 also has two detailed indications XII and XIII which are enlarged in respectively figure 12 and 13.

Figure 12 shows in detail how one or multiple lips 10' may be formed as second complementary cooperating part or cooperating parts by providing U-shaped recesses in the upward side parts of the cable duct, and how these lips may protrude from the plane of the side parts and whereby their end may be bent back in parallel to the plane of the side parts.

Figure 13 shows in detail how the two cable ducts from figure 11 may be clicked into each other by the cooperation of their complementary cooperating parts, more specifically allowing the lips 10 of the one cable duct to grab around or catch the lips 9' of the other cable duct.

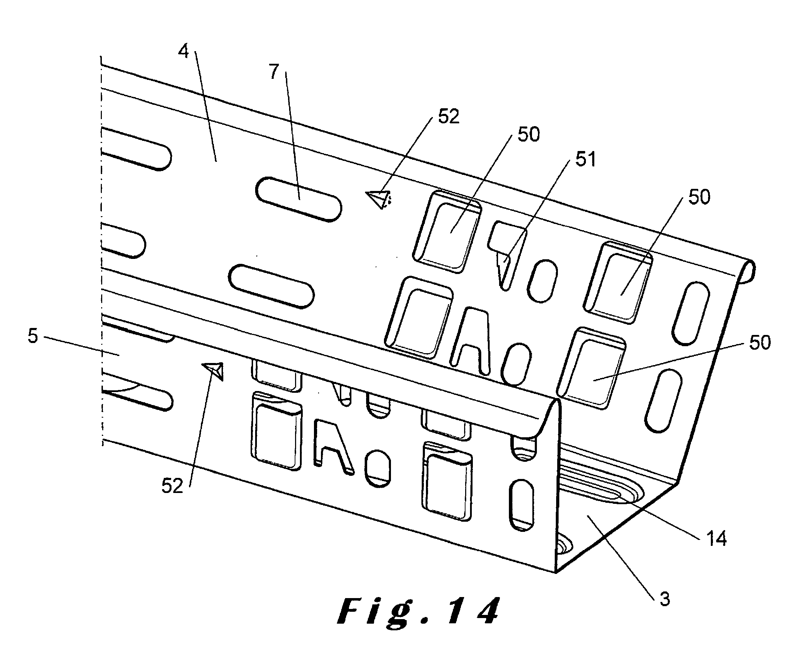

Figure 14 shows the detail of one of the ends of a preferred embodiment of one cable duct according to the present invention. In figure 14, the longitudinal slits 14 are shown with fully bent edges which are preferably provided in the bottom parts 3. In the upward side parts 4, 5 longitudinal slits 7 are also shown in figure 14. Figure 14 also shows lips 50 of which there are four shown in upward side part 4, and of which preferable equivalents may be present in upward side part 5, and which are provided as second cooperating parts by providing L-shaped recesses in the upward side parts 4, 5. In figure 14 lips 50 are shown as parts of a plane, parallel with the plane of the upward side part of which they are a part of, and brought outwards to make a good contact with the first cooperating means (9') provided in the other cable duct with which is to be connected, and also connected with two sides to the plane of the side part to obtain an increased strength of the lip. Lips 50 could alternatively also be implemented as triangular outwardly bent lips, or the lips as shown on the figure could also additionally have a triangular outwardly bend section. In figure 14, a locking lip 51 is also shown, shaped by an L-shaped recess in upward side part 4, and of which an equivalent may occur in upward side part 5. Locking lip 51 is shown in figure 14 having a triangularly outwardly bent lip. Figure 14 also shows stops 52 in the upward side parts 4, 5 which protrude outwardly and thus are suitable for, upon sliding in of lips 50 into the lips 9' of another cable duct (not shown), the locking of the outer edge of the upward side parts 4', 5' of this other cable duct which has to be introduced from below as is described above.

Now that the invention is fully described here above, it will be understood by the person skilled in the art that the invention may be implemented within a broad range of parameters within what is described in the following claims, without therefore deviating from the spirit and the extent of the invention. The person skilled in the art will have understood that the invention in its generality, as it is determined by the claims, may also comprise embodiments which are not specifically described in this document.

## Claims

1. A cable duct assembly (1) comprising a plurality of cable ducts (2, 2') having a substantially similar cross-section placed on top of each other, each of the cable ducts having a U-shaped cross-section and comprising a bottom part (3, 3') and two upward side parts (4, 5, 4', 5') provided on the opposite longitudinal edges of the bottom part (3, 3'), whereby the upward side parts (4, 5, 4', 5') extend in an angle of more than 90° relative to the bottom part (3, 3') for the formation of a conical cable duct (2, 2') whereby each of the upward side parts (4, 5, 4', 5') comprises an outwardly bent upper longitudinal edge (6, 6'), whereby the upper outwardly bent edge (6) of each of the plurality of cable ducts (2) is downwards open and is provided for accepting the outwardly bent upper longitudinal edge (6') of a cable duct (2) of the cable duct assembly (1) which is placed underneath, **characterized in that** the bottom part (3, 3') and/or at least one of the upward side parts (4, 5, 4', 5') of each of the plurality of cable ducts (2, 2') comprise a first (9, 9', 11, 11') and a second (10, 10', 12, 12') complementary cooperating part, whereby the first and second cooperating part extend in line with each other and at a certain distance apart from each other, and whereby the first complementary cooperating part (9, 9', 11, 11') of the cable duct is provided for accepting a subsequent second complementary cooperating part (10, 10', 12, 12') of a subsequent cable duct placed on top of the cable duct or vice versa, by sliding the cable ducts placed on top of each other, over each other over a certain distance until the first cooperating part of the bottom cable duct clicks into the second cooperating part of the cable duct placed thereon.

2. The cable duct assembly according to claim 1, **characterized in that** the first complementary cooperating part is a slot (11, 11') and the second complementary cooperating part is a foldable recess (12, 12') extending from the plane of the bottom part and/or at least one of the upward side parts.

3. The cable duct assembly according to any one of claims 1-2, **characterized in that** the first complementary cooperating part is a slot (9, 9') and the second complementary cooperating part is a protruding part (10, 10') extending from the plane of the bottom part and/or at least one of the upward side parts.

4. The cable duct assembly according to any one of claims 1-3, **characterized in that** the first complementary cooperating part (9, 9') is formed by an L-shaped recess in the upward side part.

5. The cable duct assembly according to claim 4 **characterized in that**, at the first complementary cooperating part (9, 9'), the lip, which is formed by the inner corner of the L-shaped recess in the upward side part, protrudes from the plane of the upward side part.

6. The cable duct assembly according to any one of claims 1-5 **characterized in that** the second complementary cooperating part (10, 10') is a lip which is formed by a U-shaped recess in the upward side part.

7. The cable duct assembly according to any one of claims 1-5 **characterized in that** the second complementary cooperating part (50, 50') is formed by an L-shaped recess in the upward side part.

8. The cable duct assembly according to claim 7 **characterized in that** at the second complementary cooperating part (50, 50') the lip, which is formed by the inner corner of the L-shaped recess in the upward side part, protrudes from the plane of the upward side part.

9. The cable duct assembly according to any one of claims 1-8, **characterized in that** the bottom part (3, 3') and/or at least one of the upward side parts (4, 5, 4', 5') of each of the plurality of cable ducts (2, 2') comprises a plurality of longitudinal slits (14, 14', 7, 7').

10. The cable duct assembly according to claim 9, **characterized in that** the longitudinal slits (14, 14') in the bottom part (3, 3') comprise at least partially bent edges, preferably in corresponding places with the different cable ducts directed to the same side, preferably the entire edge of these slits is bent, and also preferably the bending is provided in in the outward direction.

11. The cable duct assembly according to any one of the previous claims **characterized in that** the bottom part (3, 3') and/or at least one of the upward side parts (4, 5, 4', 5') of each of the plurality of cable ducts (2, 2') is provided with at least one locking lip (15, 15', 51) to lock the clicked state of the lower and the upper cable duct, for example by having the locking lip (15, 15') of one cable duct being directed horizontally and being provided such that **in that** clicked state it locks against a vertical inner edge of a recess provided in the other cable duct.

12. The cable duct assembly according to claim 11 **characterized in that** the locking lip (15, 15') is formed by a U-shaped recess in the plane into which it is provided, and protrudes from this plane.

13. The cable duct assembly according to claim 11 **characterized in that** the locking lip (51) is formed by an L-shaped recess in the plane into which it is provided and **in that** the lip, which is formed by the inner corner of the L-shaped recess in the upward side, protrudes from this plane.

14. The cable duct assembly according to one of the previous claims **characterized in that** at least one of the upward side parts (4, 5, 4', 5') of each of the plurality of cable ducts (2, 2') is provided with a stop (52) suitable for locking the outer edge of at least one of the upward side parts (4, 5, 4', 5') of the cable duct to be received upon clicking in.

15. The cable duct assembly according to any one of claims 1-14, **characterized in that** the outer edge of the outwardly bent upper longitudinal edge of each of the plurality of cable ducts comprises an inwardly folded end part (13).

## Patentansprüche

1. Kabelkanalaufbau (1), umfassend eine Mehrzahl von Kabelkanälen (2, 2'), welche einen im Wesentlichen gleichen Querschnitt aufweisen und an einander angeordnet sind, wobei jeder der Kabelkanäle einen U-förmigen Querschnitt aufweist und einen Bodenteil (3, 3') und zwei nach oben gerichtete Seitenteile (4, 5, 4', 5') umfasst, welche auf den gegenüber liegenden Längskanten des Bodenteils (3, 3') vorgesehen sind, wobei die nach oben gerichtete Seitenteile (4, 5, 4', 5') sich in einem Winkel von mehr als 90° relativ zum Bodenteil (3, 3') zur Ausbildung eines konischen Kabelkanals (2, 2') erstrecken, wobei jeder der nach oben gerichtete Seitenteile (4, 5, 4', 5') eine nach außen gebogene obere Längskante (6, 6') umfasst, wobei die nach außen gebogene obere Längskante (6) jedes der Mehrzahl von Kabelkanälen (2) nach unten offen ist und zur Aufnahme der nach außen gebogenen oberen Längskante (6') eines Kabelkanals (2) des Kabelkanalaufbaus (1) vorgesehen ist, welcher unterhalb angeordnet ist, **dadurch gekennzeichnet, dass** der Bodenteil (3, 3') und/oder wenigstens einer der nach oben gerichtete Seitenteile (4, 5, 4', 5') jedes der Mehrzahl von Kabelkanälen (2, 2') einen ersten (9, 9', 11, 11') und einen zweiten (10, 10', 12, 12') komplementären zusammenpassenden Teil umfasst, wobei der erste und der zweite zusammenpassende Teil sich zueinander gefluchtet und mit einem bestimmten Abstand voneinander erstrecken und wobei der erste komplementär zusammenpassende Teil (9, 9', 11, 11') des Kabelkanals zur Aufnahme eines anschließenden, zweiten komplementären zusammenpassenden Teils (10, 10', 12, 12') eines anschließenden Kabelkanals, welcher oben auf dem Kabelkanal oder umgekehrt angeordnet ist, durch Schieben der Kabelkanäle, die aufeinander angeordnet sind, über einander über eine bestimmte Länge vorgesehen ist, bis der erste zusammenpassende Teil des Bodenkabelkanals in den zweiten zusammenpassenden Teil des Kabelkanals, welcher auf dem anderen angeordnet ist, einrastet.

2. Kabelkanalaufbau nach Anspruch 1, **dadurch gekennzeichnet, dass** der erste komplementär zusammenpassende Teil ein Schlitz (11, 11') ist und der zweite komplementär zusammenpassende Teil ein klappbarer Rücksprung (12, 12') ist, welcher sich von der Ebene des Bodenteils und/oder wenigstens von einem der aufwärts gerichteten Seitenteile aus erstreckt.

3. Kabelkanalaufbau nach jedem der Ansprüche 1-2, **dadurch gekennzeichnet, dass** der erste komplementär zusammenpassende Teil ein Schlitz (9, 9') ist und der zweite komplementär zusammenpassende Teil ein vorspringender Teil (10, 10') ist, welcher sich von der Ebene des Bodenteils und/oder wenigstens von einem der aufwärts gerichteten Seitenteile aus erstreckt.

4. Kabelkanalaufbau nach jedem der Ansprüche 1-3, **dadurch gekennzeichnet, dass** der erste komplementär zusammenpassende Teil (9, 9') durch einen L-förmigen Rücksprung im aufwärts gerichteten Seitenteil ausgebildet ist.

5. Kabelkanalaufbau nach Anspruch 4, **dadurch gekennzeichnet, dass** am ersten komplementär zusammenpassenden Teil (9, 9') die Lippe, welche durch die innere Ecke des L-förmigen Rücksprungs im aufwärts gerichteten Seitenteil ausgebildet ist, aus der Ebene des aufwärts gerichteten Seitenteils vorragt.

6. Kabelkanalaufbau nach jedem der Ansprüche 1-5, **dadurch gekennzeichnet, dass** der zweite komplementär zusammenpassende Teil (10, 10') eine Lippe ist, welche durch einen U-förmigen Rücksprung im aufwärts gerichteten Seitenteil ausgebildet ist.

7. Kabelkanalaufbau nach jedem der Ansprüche 1-5, **dadurch gekennzeichnet, dass** der zweite komplementär zusammenpassende Teil (50, 50') durch einen L-förmigen Rücksprung im aufwärts gerichteten Seitenteil ausgebildet ist.

8. Kabelkanalaufbau nach Anspruch 7, **dadurch gekennzeichnet, dass** am zweiten komplementär zusammenpassenden Teil (50, 50') die Lippe, welche durch die innere Ecke des L-förmigen Rücksprungs im aufwärts gerichteten Seitenteil ausgebildet ist, aus der Ebene des aufwärts gerichteten Seitenteils vorragt.

9. Kabelkanalaufbau nach jedem der Ansprüche 1-8, **dadurch gekennzeichnet, dass** der Bodenteil (3, 3') und/oder wenigstens einer der aufwärts gerichteten Teile (4, 5, 4', 5') jedes Kanals der Mehrzahl von Kabelkanälen (2, 2') eine Mehrzahl von Längsschlitzen (14, 14', 7, 7') umfasst.

10. Kabelkanalaufbau nach Anspruch 9, **dadurch gekennzeichnet, dass** die Längsschlitze (14, 14') im Bodenteil (3, 3') wenigstens teilweise gebogene Kanten umfassen, vorzugsweise in jeweils entsprechenden Stellen mit den unterschiedlichen Kabelkanälen, ausgerichtet auf die gleiche Seite, wobei vorzugsweise die gesamte Kante dieser Schlitze gebogen ist und auch vorzugsweise die Biegung in die Richtung nach außen vorgesehen ist.

11. Kabelkanalaufbau nach jedem der vorangehenden Ansprüche, **dadurch gekennzeichnet, dass** der Bodenteil (3, 3') und/oder wenigstens einer der aufwärts gerichteten Teile (4, 5, 4', 5') jedes Kanals der Mehrzahl von Kabelkanälen (2, 2') mit wenigstens einer Verriegelungslippe (15, 15', 51) vorgesehen ist, um den eingerasteten Zustand des unteren und des oberen Kabelkanals zu verriegeln, zum Beispiel indem die Verriegelungslippe (15, 15') eines Kabelkanals horizontal ausgerichtet vorliegt und so vorgesehen ist, dass sie sich in jenem eingerasteten Zustand gegen eine vertikale innere Kante eines Rücksprungs, welcher im anderen Kabelkanal bereitgestellt ist, verriegelt.

12. Kabelkanalaufbau nach Anspruch 11, **dadurch gekennzeichnet, dass** die Verriegelungslippe (15, 15') durch einen U-förmigen Rücksprung in der Ebene ausgebildet ist, in welcher sie vorgesehen ist, und aus dieser Ebene vorragt.

13. Kabelkanalaufbau nach Anspruch 11, **dadurch gekennzeichnet, dass** die Verriegelungslippe (51) durch einen L-förmigen Rücksprung in der Ebene ausgebildet ist, in welcher sie vorgesehen ist, und dass die Lippe, welche durch die innere Ecke des L-förmigen Rücksprungs in der aufwärts gerichteten Seite ausgebildet ist, aus dieser Ebene vorragt.

14. Kabelkanalaufbau nach jedem der vorangehenden Ansprüche, **dadurch gekennzeichnet, dass** wenigstens einer der aufwärts gerichteten Teile (4, 5, 4', 5') jedes Kanals der Mehrzahl von Kabelkanälen (2, 2') mit einem Anschlag (52) vorgesehen ist, welcher zum Verriegeln der äußeren Kante wenigstens eines der aufwärts gerichteten Teile (4, 5, 4', 5') des Kabelkanals, der beim Einrasten aufgenommen wird, geeignet ist.

15. Kabelkanalaufbau nach jedem der Ansprüche 1-14, **dadurch gekennzeichnet, dass** die äußere Kante der nach außen gebogenen Längskante jedes Kanals der Mehrzahl von Kabelkanälen einen nach innen gefalteten Endteil (13) umfasst.

## Revendications

1. Ensemble de conduits de câble (1) comprenant une pluralité de conduits de câble (2, 2') ayant une section transversale sensiblement similaire, placés les uns au-dessus des autres, chacun des conduits de câble ayant une section transversale en forme de U et comprenant une partie fond (3, 3') et deux parties latérales dirigées vers le haut (4, 5, 4', 5') prévues sur des bords longitudinaux opposés de la partie fond (3, 3'), les parties latérales dirigées vers le haut (4, 5, 4', 5') s'étendant à un angle de plus de 90° par rapport à la partie fond (3, 3') pour la formation d'un conduit de câble (2, 2') conique, chacune des parties latérales dirigées vers le haut (4, 5, 4', 5') comprenant un bord longitudinal supérieur (6, 6') plié vers l'extérieur, le bord supérieur (6) plié vers l'extérieur de chacun de la pluralité de conduits de câble (2) étant ouvert vers le bas et étant prévu pour accepter le bord longitudinal supérieur (6') plié vers l'extérieur d'un conduit de câble (2) de l'ensemble de conduits de câble (1) qui est placé en dessous, **caractérisé en ce que** la partie fond (3, 3') et / ou au moins une des parties latérales dirigées vers le haut (4, 5, 4', 5') de chacun de la pluralité de conduits de câble (2, 2') comprennent une première (9, 9', 11, 11') et une deuxième (10, 10', 12, 12') partie coopérante complémentaire, les première et deuxième parties coopérantes s'étendant dans l'alignement l'une de l'autre et à une certaine distance l'une de l'autre, et la première partie coopérante complémentaire (9, 9', 11, 11') du conduit de câble étant prévue pour accepter une deuxième partie coopérante complémentaire subséquente (10, 10', 12, 12') d'un conduit de câble subséquent placé au-dessus du conduit de câble ou vice-versa, en faisant glisser les conduits de câble placés l'un au-dessus de l'autre l'un sur l'autre sur une certaine distance jusqu'à ce que la première partie coopérante du conduit de câble inférieur s'encliquette dans la deuxième partie coopérante du conduit de câble placé sur celui-ci.

2. Ensemble de conduits de câble selon la revendication 1, **caractérisé en ce que** la première partie coopérante complémentaire est une fente (11, 11') et la deuxième partie coopérante complémentaire est un évidement pliable (12, 12') s'étendant depuis le plan de la partie fond et / ou d'au moins une des parties latérales dirigées vers le haut.

3. Ensemble de conduits de câble selon l'une quelconque des revendications 1 - 2, **caractérisé en ce que** la première partie coopérante complémentaire est une fente (9, 9') et la deuxième partie coopérante complémentaire est une partie en saillie (10, 10') s'étendant à partir du plan de la partie fond et / ou d'au moins une des parties latérales dirigées vers le haut.

4. Ensemble de conduits de câble selon l'une quelconque des revendications 1 - 3, **caractérisé en ce que** la première partie coopérante complémentaire (9, 9') est formée par un évidement en forme de L dans la partie latérale dirigée vers le haut.

5. Ensemble de conduits de câble selon la revendication 4, **caractérisé en ce qu'**au niveau de la première partie coopérante complémentaire (9, 9'), la lèvre, qui est formée par le coin intérieur de l'évidement en forme de L dans la partie latérale dirigée vers le haut, fait saillie du plan de la partie latérale dirigée vers le haut.

6. Ensemble de conduits de câble selon l'une quelconque des revendications 1 - 5, **caractérisé en ce que** la deuxième partie coopérante complémentaire (10, 10') est une lèvre qui est formée par un évidement en forme de U dans la partie latérale dirigée vers le haut.

7. Ensemble de conduits de câble selon l'une quelconque des revendications 1 - 5, **caractérisé en ce que** la deuxième partie coopérante complémentaire (50, 50') est formée par un évidement en forme de L dans la partie latérale dirigée vers le haut.

8. Ensemble de conduits de câble selon la revendication 7, **caractérisé en ce qu'**au niveau de la deuxième partie coopérante complémentaire (50, 50'), la lèvre, qui est formée par le coin intérieur de l'évidement en forme de L dans la partie latérale dirigée vers le haut, fait saillie du plan de la partie latérale dirigée vers le haut.

9. Ensemble de conduits de câble selon l'une quelconque des revendications 1 - 8, **caractérisé en ce que** la partie fond (3, 3') et / ou au moins une des parties latérales dirigées vers le haut (4, 5, 4', 5') de chacun de la pluralité de conduits de câble (2, 2') comprend une pluralité de fentes longitudinales (14, 14', 7, 7').

10. Ensemble de conduits de câble selon la revendication 9, **caractérisé en ce que** les fentes longitudinales (14, 14') dans la partie fond (3, 3') comprennent au moins des bords partiellement pliés, de préférence dans des endroits correspondants avec les différents conduits de câble dirigés vers le même côté, la totalité du bord de ces fentes étant de préférence pliée, et le pliage étant aussi prévu de préférence en direction de l'extérieur.

11. Ensemble de conduits de câble selon l'une quelconque des revendications précédentes, **caractérisé en ce que** la partie fond (3, 3') et / ou au moins une des parties latérales dirigées vers le haut (4, 5, 4', 5') de chacun de la pluralité de conduits de câble (2, 2') est pourvue d'au moins une lèvre de verrouillage (15, 15', 51) pour verrouiller l'état encliqueté des conduits de câble supérieur et inférieur, par exemple en ayant la lèvre de verrouillage (15, 15') d'un conduit de câble dirigée horizontalement et étant prévue de telle manière qu'à l'état encliqueté elle se verrouille contre un bord intérieur vertical d'un évidement prévu dans l'autre conduit de câble.

12. Ensemble de conduits de câble selon la revendication 11, **caractérisé en ce que** la lèvre de verrouillage (51) est formée par un évidement en forme de U dans le plan dans lequel elle est prévue et fait saillie de ce plan.

13. Ensemble de conduits de câble selon la revendication 11, **caractérisé en ce que** la lèvre de verrouillage (51) est formée par un évidement en forme de L dans le plan dans lequel elle est prévue et **en ce que** la lèvre, qui est formée par le coin intérieur de l'évidement en forme de L dans le côté dirigé vers le haut, fait saillie de ce plan.

14. Ensemble de conduits de câble selon l'une quelconque des revendications précédentes, **caractérisé en ce qu'**au moins une des parties latérales dirigées vers le haut (4, 5, 4', 5') de chacun de la pluralité de conduits de câble (2, 2') est pourvue d'un arrêt (52) approprié pour verrouiller le bord extérieur d'au moins une des parties latérales dirigées vers le haut (4, 5, 4', 5') du conduit de câble qui sera reçu lors de l'encliquetage.

15. Ensemble de conduits de câble selon l'une quelconque des revendications 1 - 14, **caractérisé en ce que** le bord extérieur du bord longitudinal supérieur plié vers l'extérieur de chacun de la pluralité de conduits de câble comprend une partie terminale (13) pliée vers l'intérieur.
